# EUROPÄISCHE PATENTANMELDUNG

(11) **EP 2 236 691 A1**
(43) Veröffentlichungstag der Anmeldung: **06.10.2010**
(21) Anmeldenummer: 10450038.4
(22) Anmeldetag: 11.03.2010
(51) Int. Cl.: E04D 13/00, G01M 3/16

(54) **Verfahren und Anordnung zum Prüfen von Dächern**

(30) Priorität: 12.03.2009 AT 4012009; 04.03.2010 EP 10450033
(71) Anmelder: Petschnig, Otmar, A-9023 Klagenfurt (AT)
(72) Erfinder: Petschnig, Otmar, A-9023 Klagenfurt (AT)
(74) Vertreter: Hehenberger, Reinhard

(57) **Zusammenfassung**

Mit einer Anordnung zum Prüfen von Dächern (1), insbesondere um entscheiden zu können, ob das Dach zu sanieren oder zu reparieren ist, wird festgestellt, ob das Dach (1) dicht oder von innen (Wasserdampf) oder von außen (Meteorwasser) auftritt und allfällige undichte Stellen lokalisiert werden. In das Dach (1) werden mehrere, die Anwesenheit von flüssigem Wasser und von Wasserdampf erfassende Sensoren (11) eingebaut. Dabei erfassen die Sensoren (11), die in der Nähe der Dampfsperre (5) angeordnet sind, die Anwesenheit von flüssigem Wasser, und die Sensoren (11), die auf der Wärmedämmschicht (7) angeordnet sind, die Anwesenheit von Wasserdampf. Dadurch, dass an mehreren Stellen des Daches (1) an der Außenseite der Dampfsperre (5) auf die Anwesenheit von flüssigem Wasser einerseits, und auf der außerhalb der Dampfsperre (5) angeordneten Wärmedämmschicht (7) auf die Anwesenheit von Wasserdampf anderseits geprüft wird, lässt sich eine exakte Beurteilung des Zustandes des Daches vornehmen, um festzustellen, ob bauphysikalische Probleme, beispielsweise im Bereich der Dampfsperre, von Anschlüssen oder Ähnlichem vorliegen und/oder ob schädliches oder unschädliches Kondensat vorliegt.

## Beschreibung

Die Erfindung betrifft ein Verfahren zum Prüfen von Dächern und eine Anordnung, mit welcher das Verfahren ausgeführt werden kann.

Um den Zustand von Dächern zu prüfen ist es unter anderem erforderlich festzustellen, ob im Dach Feuchtigkeit (Wasser) vorhanden ist. Es geht dabei darum, festzustellen, ob das Dach dicht ist, und im Falle einer Undichtheit, wenn sich also im Dach Wasser befindet, festzustellen, wo Wasser vorhanden ist, bzw. Wasser eingedrungen ist.

Um festzustellen, wo ein Dichtheitsproblem besteht, ob also Wassereintritt in das Dach von außen und/oder von innen her möglich ist, weil außen oder innen ein Fehler vorliegt, beispielsweise ob ein Problem der Dampfsperre (schlecht eingebaut) vorliegt, oder ob Anschlüsse undicht sind und/oder ob in der Dachhaut oder in der Dampfsperre Beschädigungen vorliegen, musste bislang das Dach mehr oder weniger großflächig geöffnet werden.

Dies ist ein erheblicher Aufwand, der nicht nur viel Zeit kostet und die Anwesenheit von Fachleuten erfordert, sondern auch teuer ist.

Aus der JP 2008-233031 A ist ein Verfahren und eine Anordnung zum Prüfen von Dächern, bei dem an wenigstens zwei Stellen des zu prüfenden Daches auf Anwesenheit von flüssigem (tropfbarem) Wasser geprüft wird, bekannt. Bei dem Verfahren der JP 2008-233031 A wird ausschließlich auf die Anwesenheit von flüssigem Wasser geprüft. Daher ist es nicht möglich festzustellen, ob Wasser von außen oder von innen her eingetreten ist oder eintritt.

Der Erfindung liegt die Aufgabe zugrunde, ein Verfahren der eingangs genannten Gattung und eine zum Ausführen des Verfahrens geeignete Anordnung zur Verfügung zu stellen, mit welcher der Zustand eines Daches geprüft werden kann.

Gelöst wird diese Aufgabe erfindungsgemäß mit einem Verfahren, welches die Merkmale von Anspruch 1 aufweist.

Bevorzugte und vorteilhafte Ausgestaltungen des erfindungsgemäßen Verfahrens sind Gegenstand der Unteransprüche.

Insoweit die Anordnung zum Ausführen des erfindungsgemäßen Verfahrens betroffen ist, wird diese Aufgabe mit den Merkmalen des Anspruches 8 gelöst.

Bevorzugte und vorteilhafte Ausgestaltungen der erfindungsgemäßen Anordnung sind Gegenstand der Unteransprüche.

Mit dem erfindungsgemäßen Verfahren kann ohne weiteres festgestellt werden, ob das geprüfte Dach dicht ist und, falls es undicht ist, wo sich die undichte Stelle befindet. Vorteil bei dem erfindungsgemäßen Verfahren ist es, dass eine laufende Überprüfung des Zustandes des Daches vorgenommen werden kann und aus den gewonnenen Werten unmittelbar auf den Zustand des Daches geschlossen werden kann, so dass Sanierungs-und/oder Reparaturmaßnahmen unverzüglich und gezielt eingeleitet werden können, bevor größere Probleme auftreten.

Besonders bevorzugt ist es bei dem erfindungsgemäßen Verfahren, wenn an mehreren Stellen im Dach auf die Anwesenheit von flüssigem (tropfbarem) Wasser in unmittelbarer Nähe, bevorzugt oberhalb bzw. außerhalb der Dampfsperre, geprüft wird, da so der Ort, wo sich Wasser befindet, zuverlässig festgestellt werden kann.

Ebenso ist es im Rahmen der Erfindung bevorzugt, wenn an mehreren Stellen des Daches auf die Anwesenheit von Wasserdampf geprüft wird. Das Prüfen auf die Anwesenheit von Wasserdampf erfolgt bevorzugt im Bereich einer im Dach vorgesehenen Wärmedämmschicht. Dabei können Wasserdampf erfassende Sensoren (Fühler) in der Mitte der Wärmedämmschicht oder - bevorzugt - an der Oberseite der Wärmedämmschicht, insbesondere zwischen der Wärmedämmschicht und der Dachhaut vorgesehen sein.

Dabei wird in der Regel so vorgegangen, dass die Stellen, an denen auf die Anwesenheit von Wasser (flüssiges Wasser) und Wasserdampf geprüft wird, über die Dachfläche verteilt angeordnet sind, da so der Ort, wo sich Wasser befindet, zuverlässig festgestellt werden kann.

Besonders bevorzugt ist es im Rahmen der Erfindung, wenn an mehreren Stellen des Daches an der Außenseite der Dampfsperre auf die Anwesenheit von flüssigem Wasser und/oder von Wasserdampf, und gleichzeitig, beispielsweise an dieser Stelle, im Bereich der außerhalb der Dampfsperre angeordneten Wärmedämmschicht oder oberhalb der Wärmedämmschicht, auf die Anwesenheit von Wasser und/oder Wasserdampf geprüft wird. Im Rahmen der Erfindung ist auch in Betracht gezogen, dass im Bereich der Wärmedämmung nicht nur auf Wasser, sondern auf Wasserdampfeintrag bzw. Kondensateintrag geprüft wird, wobei im Zuge einer Beobachtung über einen längeren Zeitraum auch zwischen "schädlichem Kondensat" (dieses trocknet auch über einen längeren Zeitraum nicht aus) und "nicht schädlichem Kondensat" (dieses trocknet früher oder später) unterschieden werden kann.

Sowohl die oberhalb der Wärmedämmschicht als auch die oberhalb der Dampfsperre angeordneten Sensoren - oder einzelne derselben - können mit Abstand von der Wärmedämmschicht und von der Dampfsperre angeordnet sein. Dieses erlaubt insbesondere für oberhalb der Dampfsperre angeordnete Sensoren, dass diese nicht nur die Anwesenheit von flüssigem Wasser, sondern auch von Wasserdampf erfassen können. Dabei ist in Betracht gezogen, dass nur die Sensoren oberhalb der Dampfsperre oder nur die Sensoren oberhalb der Wärmedämmschicht mit Abstand oberhalb derselben angeordnet sind.

Für die erfindungsgemäß vorzunehmende Prüfung sind beispielsweise Betauungssensoren, also Sensoren, welche die relative Luftfeuchtigkeit erfassen, geeignet.

Das erfindungsgemäße Verfahren und die erfindungsgemäße Anordnung eröffnen die Möglichkeit, nachdem über einen Zeitraum die Anwesenheit von Wasser bzw. Wasserdampf überprüft worden ist und nach dem Erarbeiten von Kennwerten bei vorhandener Feuchtigkeit im Dachaufbau zwischen einer Feuchtigkeitsproblematik, die auf Grundlage von Meteorwässern (Regen usw.) von außen auf das Dach einwirkt, und Feuchtigkeitseintritt von innen auf Grund einer undichten Dampfsperre zu unterscheiden. Diese bisher nicht vorhandene Möglichkeit erlaubt es insbesondere durch das Messen von Wasserdampf (relativer Luftfeuchtigkeit) im Dachaufbau den Zustand des Daches festzustellen.

Das erfindungsgemäße Verfahren und die erfindungsgemäße Anordnung sind auch bei einer Entscheidung, ob und wie ein Dach saniert werden soll, von erheblichem Vorteil, da der Feuchtigkeitseintritt flächenmäßig genau eingegrenzt werden kann, indem festgestellt wird, "Dach feucht bzw. nass oder trocken", so dass sich in der Eingrenzung von Sanierungsmaßnahmen erhebliche Kostenvorteile ergeben. In diesem Zusammenhang ist in Erinnerung zu rufen, dass bei großen Dächern oft die gesamte Dachfläche saniert wird, obwohl nur ein Teil der Dachfläche schadhaft ist.

Ein weiterer Vorteil des erfindungsgemäßen Verfahrens und der erfindungsgemäßen Anordnung ist es, dass festgestellt werden kann, ob eine Sanierung von außen (durch Aufbringen einer neuen Dachhaut) erforderlich ist, oder ob die Feuchtigkeitsproblematik im Schichtenaufbau des Daches besteht und damit auch die Dampfdichtheit (beispielsweise durch Einbringen einer neuen bzw. dampfdichten Dampfsperre) wieder hergestellt werden kann. Hingegen wird im Stand der Technik eine rein rechnerisch vorgenommene Überprüfung der Dampfdichtheit vorgenommen, was insofern problematisch ist, da der dichte Hochzug der Dampfsperre vorausgesetzt werden musste, jedoch diese Dichtheit in der Praxis nie nachgewiesen werden kann.

Überdies bietet die erfindungsgemäße Verfahrensweise und die erfindungsgemäße Anordnung die Möglichkeit, über einen längeren Zeitraum zwischen schädlichem und nicht schädlichem Kondensateintritt in die Dachfläche zu unterscheiden und damit auch für einen längeren Zeitraum klare Aussagen über Alterungen und sinnvolle Sanierungsmaßnahmen von Dächern zu liefern. Hiezu gehört im Rahmen der Erfindung insbesondere auch die Anordnung von Wartungsindikatoren bzw. Feuchtigkeitsindikatoren, die ergibt, dass durch eine sinnvolle Anordnung an tiefen Stellen des Daches eine genaue und vereinfachte Fehlereingrenzung möglich ist.

Durch die Erfindung ergeben sich gegenüber dem Stand der Technik erhebliche Vorteile, wie dies beispielhaft nachstehend erläutert wird.

Das erfindungsgemäße Verfahren erlaubt eine Unterscheidung, ob ein Wassereintritt von außen her (Meteorwasser) oder von innen her durch eine undichte Dampfsperre erfolgt ist.

Durch die Anordnung von Sensoren und der damit verbundenen Abschottung ist bei einem Wassereintritt sowohl eine klare Fehlereingrenzung als auch eine zielgerichtete Sanierung (Reparatur) zu vertretbaren Kosten möglich und es sind großflächige Sanierungen nicht mehr erforderlich.

Die Erfindung erlaubt es, die Sensoren im Nachhinein, also in einem fertiggestellten Dach einzubauen, und dennoch aussagekräftige Werte zur Funktionsfähigkeit des Dachpaketes sowohl im Bezug auf Dampfsperre als auch Dachdichtheit zu erlangen.

Das erfindungsgemäße Verfahren erlaubt es, dieses als Prüfverfahren einzusetzen, um die Dachdichtheit zu prüfen, und ersetzt das aufwändige und nicht immer durchführbare Verfahren einer Wasserprobe.

Die erfindungsgemäße Verfahrensweise und die erfindungsgemäße Anordnung erlauben es, eine schlüssige Aussage zum Thema Kondensation und somit eine Unterscheidung zwischen schädlichem und nicht schädlichem Kondensat zu treffen.

Besonders vorteilhaft ist es, dass das erfindungsgemäße Verfahren und die erfindungsgemäße Anordnung auch bei sogenannten Passivhäusern mit stärkeren Wärmedämmschichten klare Aussagen liefern und das Phänomen der Sekundärkondensation berücksichtigen können, sodass eine klare Aussage zur Kondensation im Dachpaket möglich ist.

Da das erfindungsgemäße Verfahren und die erfindungsgemäße Anordnung genaue Ergebnisse hinsichtlich Wasser im Dachpaket erlauben, ist die Möglichkeit gegeben, die Sanierung auf die erhaltenen Ergebnisse abzustimmen, wobei vor allem zu beachten ist, dass durch eine Veränderung der Feuchtigkeit im Dachpaket auch eine Aussage über allfällige sich abzeichnende Schäden im Dachpaket möglich ist, wobei ebenso eine Früherkennung möglich ist.

Das erfindungsgemäße Verfahren und die erfindungsgemäße Anordnung können bei jeder Art von Dachkonstruktionen, auch bei Metalldächern, vorteilhaft eingesetzt werden.

Das erfindungsgemäße Verfahren und die erfindungsgemäße Anordnung sind auch bei Bauwerken in Form von Holzleichtbauweise vorteilhaft und zielführend einsetzbar, vor allem im Zusammenhang mit immer stärker verwendeten Holzleichtbauelementen, die in Dachpaketen verwendet werden. Hier gibt die Erfindung die Möglichkeit, die Feuchtigkeit zu messen und zu detektieren, vor allem im Hinblick darauf, dass das Verrotten von Holz auch bei Vorliegen von nicht flüssigem Wasser auftritt und dieses mit Hilfe des erfindungsgemäßen Verfahrens eindeutig detektiert werden kann. So erlauben das erfindungsgemäße Verfahren und die erfindungsgemäße Anordnung auch eine schlüssige Beurteilung der statischen Tragfähigkeit von Elementen.

Von erheblichem Vorteil ist es auch, dass die erfindungsgemäße Anordnung bei bestehenden Dachflächen durch nachträglichen Einbau verwirklicht werden kann, sodass auch bei bestehenden Dachflächen eindeutige Aussagen im Bezug auf Feuchtigkeitseinwirkung von außen bzw. von innen beispielsweise auf Grund fehlender oder fehlerhafter Dampfsperren getroffen werden können und überdies zum Nachweis von Dichtheiten bei bestehenden Dachflächen herangezogen werden können.

In einer Ausführungsform kann sich das erfindungsgemäße Verfahren dadurch auszeichnen, dass die Anwesenheit von flüssigem Wasser oberhalb bzw. außerhalb der Dampfsperre geprüft wird.

In einer Ausführungsform kann sich das erfindungsgemäße Verfahren dadurch auszeichnen, dass auf die Anwesenheit von Wasserdampf mittig in der Wärmedämmschicht oder an der Oberseite der Wärmedämmschicht geprüft wird.

In einer Ausführungsform kann sich das erfindungsgemäße Verfahren dadurch auszeichnen, dass die Stellen, an denen geprüft wird, über die Dachfläche verteilt angeordnet sind.

In einer Ausführungsform kann sich das erfindungsgemäße Verfahren dadurch auszeichnen, dass die Stellen, an denen geprüft wird, über die Dachfläche, beispielsweise gleichmäßig, verteilt angeordnet sind.

In einer Ausführungsform kann sich das erfindungsgemäße Verfahren dadurch auszeichnen, dass an mehreren Stellen des Daches an der Außenseite der Dampfsperre auf die Anwesenheit von flüssigem Wasser und gleichzeitig an diesen Stellen im Bereich der außerhalb der Dampfsperre angeordneten Wärmedämmschicht auf die Anwesenheit von Wasserdampf geprüft wird.

In einer Ausführungsform kann sich das erfindungsgemäße Verfahren dadurch auszeichnen, dass je 1000m² Dachfläche an drei bis zehn, insbesondere sechs, Stellen geprüft wird.

In einer Ausführungsform kann sich die erfindungsgemäße Anordnung dadurch auszeichnen, dass die Sensoren über die Fläche des Daches verteilt, insbesondere gleichmäßig verteilt, angeordnet sind.

In einer Ausführungsform kann sich die erfindungsgemäße Anordnung dadurch auszeichnen, dass je 1000m² drei bis zehn, vorzugsweise sechs, Sensoren vorgesehen sind.

In einer Ausführungsform kann sich die erfindungsgemäße Anordnung dadurch auszeichnen, dass Sensoren vorgesehen sind, die sowohl einen die Anwesenheit von flüssigem Wasser als auch einen die Anwesenheit von Wasserdampf erfassenden Bereich ausweisen.

In einer Ausführungsform kann sich die erfindungsgemäße Anordnung dadurch auszeichnen, dass die Sensoren mit dem Anzeigegerät verbindenden Leitungen abgedichtet durch ein dicht durch die Dachhaut geführtes Rohr gehen.

In einer Ausführungsform kann sich die erfindungsgemäße Anordnung dadurch auszeichnen, dass das Rohr mit einer Platte, die zwischen der Dachhaut und der Wärmedämmschicht angeordnet ist, verbunden ist.

In einer Ausführungsform kann sich die erfindungsgemäße Anordnung dadurch auszeichnen, dass das Anzeigegerät eingerichtet ist, die Daten betreffend die Anwesenheit von flüssigem Wasser und/oder die betreffend Wasserdampf als Werte für die Feuchte (flüssiges Wasser) bzw. Werte für den relativen Feuchtegehalt (Wasserdampf) zu erfassen.

In einer Ausführungsform kann sich die erfindungsgemäße Anordnung dadurch auszeichnen, dass an das Anzeigegerät ein Gerät angeschlossen ist, das die erfassten Werte betreffend die Feuchte (Anwesenheit von flüssigem Wasser) und/oder die erfassten Werte betreffend den relativen Feuchtegehalt (Anwesenheit von Wasserdampf) aufzeichnet.

In einer Ausführungsform kann sich die erfindungsgemäße Anordnung dadurch auszeichnen, dass das weitere Gerät eingerichtet ist, die erfassten Werte in einem Diagramm über die Zeit darzustellen.

In einer Ausführungsform kann sich die erfindungsgemäße Anordnung dadurch auszeichnen, dass als Sensoren für das Erfassen von flüssigem Wasser Leitwertsensoren vorgesehen sind.

In einer Ausführungsform kann sich die erfindungsgemäße Anordnung dadurch auszeichnen, dass als Sensoren für das Erfassen von Wasserdampf resistive Feuchtesensoren vorgesehen sind.

In einer Ausführungsform kann sich die erfindungsgemäße Anordnung dadurch auszeichnen, dass die Sensoren jeweils einen Leitwertsensor und einen resistiven Feuchtesensor aufweisen.

Bei der erfindungsgemäßen Anordnung können die im Bereich der Wärmedämmschicht angeordneten Sensoren, welche die Anwesenheit von Wasserdampf erfassen, an der Oberseite der Wärmedämmschicht, beispielsweise zwischen dieser und der Deckhaut, oder innerhalb der Wärmedämmschicht, z.B. in deren Mitte, angeordnet sein.

Wenn die Sensoren auf der Dampfsperre nicht nur flüssiges Wasser zu detektieren haben, können diese mit einem Abstandhalter (z.B. 5, mm mittels Klebeband oder ähnlichen) so angeordnet sein, dass sie auch in der Lage sind, Wasserdampf zu detektieren, was vor allem oberhalb der Dampfsperre besonders vorteilhaft ist, um gerade in diesem Bereich eine Aussage zur Dampfdichtheit zu erhalten. Ebenso ist es ein Vorteil, wenn die Sensoren beides, nämlich Wasserdampf und Wasser, detektieren können.

Bis jetzt wird bei Flachdächern zur Prüfung der Dichtheit von Dächern nur die sogenannte "Wasserprobe" angewendet. Diese ist dermaßen gestaltet, dass die gesamte Dachfläche unter Wasser gesetzt wird und nach 48 Stunden die entsprechende Wassersäule, die mindestens 5 cm Höhe an der gesamten Dachfläche erreichen sollte, wieder abgelassen wird. Dieses Verfahren hat jedoch Nachteile, da es bei verschiedenen Dachkonstruktionen überhaupt nicht anwendbar ist, da schon ein Gefälle des Daches eine solche Prüfung nicht zulässt und es bei Vorliegen einer Dachundichtheit vorkommt, dass das gesamte Dach durch die Wasserprobe unter Wasser gesetzt wird, und damit die Dämmung durchnässt wird und in ihrer Funktion unbrauchbar werden kann.

Das erfindungsgemäße Verfahren mit Dachsensoren erlaubt auch mittels Beilage eines entsprechenden Prüfprotokolls den Ersatz der problematischen Dichtheitsprüfung mittels Wasserprobe und einen entsprechenden Nachweis für den Objekthalter.

Bei der Anordnung der Sensoren in der Dachfläche kann die Gefällesituation vor Ort beim Einbau der Sensoren (Wahl der Stelle, wo Sensoren angebracht weden) berücksichtigt werden, um eine zielgerichtete Aussage zur gesamten Dachsituation und Ablesung der Messergebnisse zu erhalten.

Die erfindungsgemäß eingesetzten Sensoren erlauben es auch, im Zuge der in Normen zwingend vorgeschriebenen Instandhaltung von Dächern, ein einfaches Prüfverfahren bezogen auf die Dichtheit des Daches sowohl auf die Dampfdichtheit von innen als auch auf die Wasserdichtheit von außen, auszuführen. Dies ist auch bei eventuellen Veräußerungen von Objekten eine einfache und taugliche Methode zum Nachweis einer funktionierenden Dachisolierung bzw. Dachdichtung.

Zum Ausweis der Messprotokolle können die Daten mittels eines EDV-Programms direkt in ein entsprechendes Ablesegerät eingespielt werden, um anhand von Referenzwerten unter Berücksichtigung von Beschattungssituation, Dachaufbau, Temperatur und Luftfeuchtigkeit eine klare Aussage über schädliches zu unschädlichem Kondensat zu liefern.

Bei Elementen in Leichtbauweise ist eine funktionierende Dampfsperre wesentlich, da bei Feuchtigkeitseintritt von schädlichem Kondensat die gesamte Tragkonstruktion massiv in Mitleidenschaft gezogen werden kann, ja sogar ihre statische Tragfähigkeit verlieren kann. In diesem Zusammenhang liegen bereits einige Erfahrenswerte aus dieser, seit ca. 10 Jahren gebräuchlicher Bauweise vor und hier bietet das erfindungsgemäße Verfahren die Möglichkeit des Nachweises der Dichtheit auch von solchen Elementdächern sowohl im Bezug auf Meteorwasser bzw. von Seiten der Dampfdichtheit in den Elementen.

Im Zusammenhang mit den zu ermittelnden Referenzwerten, die auf den Schichtenaufbau des Daches abgestimmt sind, gelingt es den Sensoren auch, unabhängig von den "Rechenwert", klare Aussagen im Bezug von schädliches zu nicht schädlichem Kondensat im Dachpaket im Bereich der jahres- bzw. Tagesamplitude zu ermöglichen und hier eine klare Aussage über Dachdichtheit im Bezug auf Wassereintritt von außen oder Kondensateinwirkung von innen zu liefern.

Weitere Einzelheiten und Merkmale des erfindungsgemäßen Verfahrens und der erfindungsgemäßen Anordnung ergeben sich aus der nachstehenden Beschreibung unter Bezugnahme auf die beispielhaften Zeichnungen.

Es zeigt:
Fig. 1 schematisch im Schnitt ein Dach mit einer erfindungsgemäßen Anordnung,
Fig. 2 schematisch den wesentlichen Aufbau eines im Rahmen der Erfindung verwendbaren Sensors und
Fig. 3 eine andere Ausführungsform einer erfindungsgemäßen Anordnung.

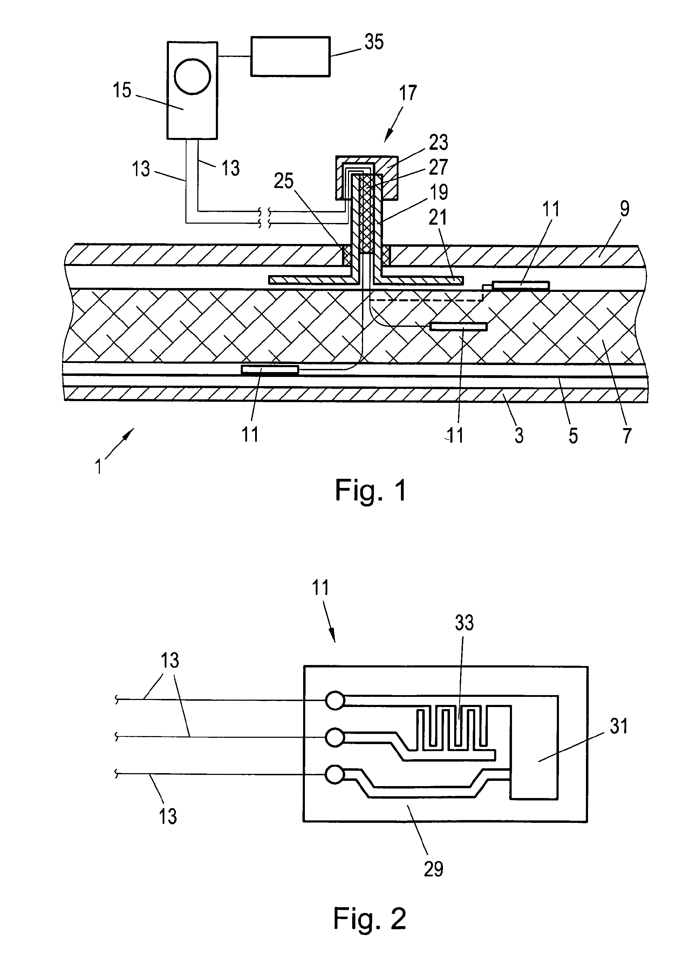

Ein in Fig. 1 gezeigtes Dach 1 besitzt an seiner Unterseite eine Tragplatte 3, auf der eine Kunststofffolie oder eine bituminöse Dampfsperrbahn als Dampfsperre 5 aufliegt. Auf der Folie 5 ist eine Schicht Wärmedämmung (Wärmedämmschicht) 7 vorgesehen. Auf der Wärmedämmung 7 liegt als Außenseite des Daches eine Dachhaut 9 aus Blech, Kunststoff, Dachziegeln, Dachschindeln, Bitumenbahnen oder Ähnlichem auf. Die Tragplatte kann aus Beton, Trapezblech, Holzverbundwerkstoffen, Metall oder sonstigem statisch geeigneten Untergrund bestehen.

Die erfindungsgemäße Anordnung umfasst mehrere Sensoren 11, von welchen in Fig. 1 lediglich zwei dargestellt sind. Die Sensoren 11 sind über die Fläche des Daches, vorzugsweise gleichmäßig, verteilt angeordnet, wobei Sensoren 11 auf der Dampfsperre 5 aufliegend und weitere Sensoren 11 im Bereich der Wärmedämmung 7, z.B. in der Mitte der Wärmedämmung (Wärmedämmschicht) 7 oder, wie in Fig. 1 angedeutet, auf der Wärmedämmung 7 aufliegend, also zwischen dieser und der Dachhaut 9, vorgesehen sind. Die Datenleitungen 13, die von den Sensoren 11 wegführen, sind durch eine Durchführung 17 aus dem Dach heraus geführt. Die Leitungen 13 können auch durch die Unterseite des Daches 1 aus diesem heraus und zu dem Anzeigegerät 15 geführt werden. Die Durchführung 17 kann ein übliches am Markt erhältliches Einfassungssystem sein, welches dicht in die Dachhaut eingebunden werden kann. Vorteilhaft ist im Rahmen der Erfindung, dass die Datenleitungen 13 mit dem Stecksystem zum Messen des Feuchtigkeitseintrages zuverlässig und wartungsfrei befestigt werden können, um diese auch bei Begehungen entsprechend ablösbar zugänglich zu haben.

Die Durchführung 17 besitzt ein Rohr 19 und einen Flansch 21, wobei der Flansch 21 zwischen der Oberseite der Wärmedämmung 7 und der Unterseite der Dachhaut 9 angeordnet ist. Das Rohr 19 der Durchführung 17 durchsetzt eine Öffnung in der Dachhaut 9, wobei zwischen dem Rand der Öffnung in der Dachhaut 9 und der Außenseite des Rohres 19 eine Dichtung 25 vorgesehen ist. Die Dichtung 25 ist nur in den Fällen erforderlich, in denen die Durchführung 17, insbesondere ihr Flansch 21, mit der Dachhaut 9 nicht dicht verbunden ist. Wenn die Durchführung 17, insbesondere deren Flansch 21, mit der Dachhaut 9 auf beliebige Weise dicht verbunden ist, also die Durchführung 17 dicht an das Dach eingesetzt ist, wird keine Dichtung 25 benötigt.

Um ganz sicher zu gehen, dass durch die Durchführung 17 keine Feuchtigkeit in das Dach 1 eindringt, kann die Innenseite des Rohres 19 mit einer Dichtmasse 27 ausgegossen sein, was aber in der Regel nicht erforderlich ist.

Zusätzlich ist über das obere, freie Ende des Rohres 19 eine Kappe 23 gesetzt. Die Leitungen 13 führen zu einem Anzeigegerät 15, das die von den Sensoren 11 erfassten Werte für die Anwesenheit von Wasser und gegebenenfalls auch Wasserdampf oder Kondensat anzeigt und gegebenenfalls aufzeichnet und diagrammartig darstellt.

Dabei ist vorgesehen, dass die Sensoren 11, die im Bereich der Wärmedämmung 7 angeordnet sind, in erster Linie die Anwesenheit von Wasserdampf in der Wärmedämmung 7 erfassen, wogegen die Sensoren 11, die auf der Außenseite der Dampfsperre 5 aufliegen, in erster Linie die Anwesenheit von flüssigem (tropfbarem) Wasser, also kondensiertem Wasser, feststellen.

Durch eine mit Rücksicht auf die Ausbildung und die Gegebenheiten des Daches gewählte (örtliche) Anordnung der Sensoren ist eine klare Eingrenzung von offenen Stellen (also Stellen, wo Wasser, Wasserdampf oder Kondensat eindringen kann) möglich, wodurch sich gegenüber den bekannten Verfahren erhebliche Kosteneinsparungen beim Sanieren/Reparieren ergeben.

In diesem Zusammenhang ist auch zu erwähnen, dass durch das erfindungsgemäße Verfahren und die erfindungsgemäße Anordnung die Lebensdauer von Dächern erheblich verlängert werden kann, da Sanierungen auf Grund unrichtiger Fehlereinschätzung bzw. unrichtiger bauphysikalischer Beurteilung vermieden sind. Durch die klare Eingrenzung des Ortes von fehlerhaften Eintritten von Meteorwasser von außen oder schädlichem Kondensateintrag von innen ist eine folgerichtige und genaue Wahl der auszuführenden Sanierung des Daches gewährleistet.

Ein beispielsweiser Aufbau für einen Sensor 11 ist in Fig. 2 gezeigt. Der Sensor 11 besitzt auf einem Träger 29, bevorzugt in Form einer gedruckten Schaltung, einen resistiven Feuchtesensor 31, der Wasserdampf feststellt, und einen Leitwertsensor 33, der flüssiges Wasser (kondensierten Wasserdampf) erfasst.

Die Sensoren 11 sind bevorzugt in einem Gehäuse untergebracht, das eine Öffnung in der oberen Abdeckung aufweist, wobei zwischen der Öffnung in der Abdeckung und dem eigentlichen Sensor 11 eine Filterlage angeordnet sein kann. Bevorzugt ist eine Ausführungsform von Sensoren 11 vorgesehen, bei welcher in dem Sensor 11 bzw. dessen Gehäuse ein Stecker vorgesehen ist, so dass die zum Ablesegerät führenden Datenleitungen 13 angesteckt werden können.

Die Sensoren 11, die im Bereich der Wärmedämmung 7 (in dieser oder auf dieser) angeordnet sind, einerseits, und die Sensoren 11, die auf der Dampfsperre 5 aufliegend angeordnet sind, andererseits, sind über die Dachfläche, bevorzugt gleichmäßig verteilt, angeordnet, wobei es hinreicht, wenn je 1000m² Dachfläche je sechs Sensoren im Bereich der Wärmedämmung 7 und auf der Folie der Dampfsperre 5 angeordnet vorgesehen sind.

Das Anzeigegerät 15 ist so eingerichtet, dass es die Daten betreffend die Anwesenheit von flüssigem Wasser und die Daten betreffend die Anwesenheit von Wasserdampf als Werte für die Feuchte (flüssiges Wasser) und als Werte für den relativen Feuchtegehalt (Wasserdampf) erfassen und anzeigen kann.

An das Anzeigegerät 15 kann ein weiteres Gerät 35 angeschlossen sein, das die erfassten Werte betreffend die Feuchte (Anwesenheit von flüssigem Wasser) und die erfassten Werte betreffend den relativen Feuchtegehalt (Anwesenheit von Wasserdampf) aufzeichnet, wobei die Möglichkeit besteht, die erfassten Werte in einem Diagramm über die Zeit darzustellen.

Bevorzugt wird im Rahmen der Erfindung, wenngleich dies nicht zwingend ist, mit Sensoren 11 gearbeitet, die auf einem Träger 29, wie in Fig. 2 dargestellt, zwei Einzelsensoren 31, 33 aufweisen. Dabei reagiert der resistive Betauungssensor 31 auf hohe Werte der relativen Feuchte (beispielsweise 93 bis 99% der relativen Feuchte), wogegen der zweite Sensor ein Leitwertsensor 33, beispielsweise mit Interdigitalstruktur, ist, der Kondensat, also flüssiges (tropfbares) Wasser erkennt.

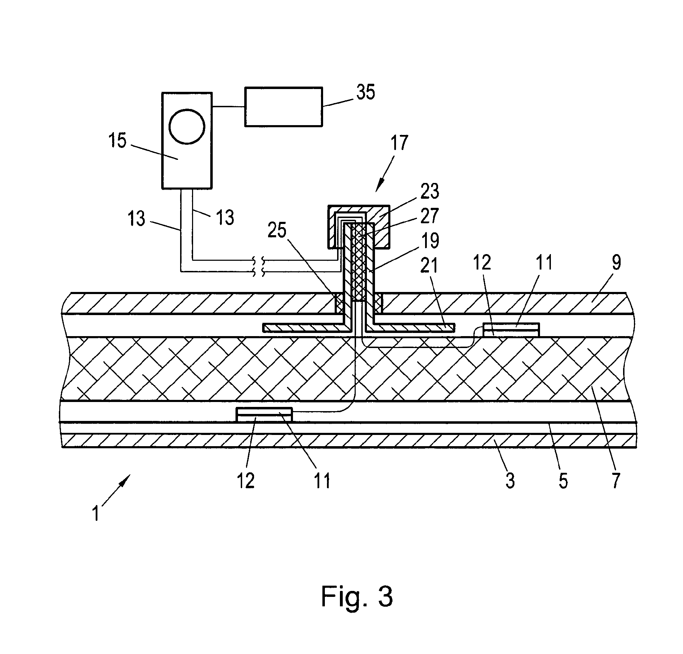

Bei der in Fig. 3 gezeigten Ausführungsform sind Sensoren 11 über Abstandhalter 12 (z.B. Klebebänder u.ä.) mit Abstand (in der Größenordnung von 2 bis 10 mm, insbesondere 5 mm) von der Oberseite der Dampfsperre 5 und mit Abstand (in der Größenordnung von 2 bis 10 mm, insbesondere 5 mm) von der Oberseite der Wärmedämmschicht 7 angeordnet.

Das Anordnen von Sensoren 11 mit Abstand kann auch nur bei einzelnen Sensoren 11 vorgesehen sein.

In Betracht gezogen ist es, auch nur (die) Sensoren 11 auf der Dampfsperre 5 oder nur (die) Sensoren 11 auf der Wärmedämmschicht 7 mit (dem in Fig. 3 gezeigten) Abstand anzuordnen.

Zusammenfassend kann ein Ausführungsbeispiel der Erfindung wie folgt dargestellt werden:
Mit einer Anordnung zum Prüfen von Dächern 1, insbesondere um entscheiden zu können, ob das Dach zu sanieren oder zu reparieren ist, indem festgestellt wird, ob das Dach 1 dicht oder von innen (Wasserdampf) oder von außen (Meteorwasser) her undicht ist und allfällige undichte Stellen lokalisiert werden, werden in das Dach 1 mehrere, die Anwesenheit von flüssigem Wasser und von Wasserdampf erfassende Sensoren 11 eingebaut. Dabei erfassen die Sensoren 11, die in der Nähe der Dampfsperre 5 angeordnet sind, die Anwesenheit von flüssigem Wasser, und Sensoren 11, die auf der Wärmedämmschicht 7 angeordnet sind, die Anwesenheit von Wasserdampf. Dadurch, dass an mehreren Stellen des Daches 1 an der Außenseite der Dampfsperre 5 auf die Anwesenheit von flüssigem Wasser einerseits, und auf der außerhalb der Dampfsperre 5 angeordneten Wärmedämmschicht 7 auf die Anwesenheit von Wasserdampf anderseits geprüft wird, lässt sich eine exakte Beurteilung des Zustandes des Daches vornehmen, um festzustellen, ob bauphysikalische Probleme, beispielsweise im Bereich der Dampfsperre, von Anschlüssen oder Ähnlichem vorliegen und/oder ob schädliches oder unschädliches Kondensat vorliegt.
Die Anordnung erlaubt eine Aussage in Bezug auf statische Begebenheiten auch bei Leichtdachelementen aus Holz oder ähnlichen Konstruktionen zu erhalten. Die Dichtheitsprüfung mit der erfindungsgemäßen Anordnung mit Sensoren ist bei Vorliegen eines Schadens wesentlich effektiver un ungefährlicher als die bisher übliche Wasserprobenprüfung.

## Patentansprüche

1. Verfahren zum Prüfen von Dächern, bei dem an wenigstens zwei Stellen des zu prüfenden Daches auf Anwesenheit von flüssigem (tropfbarem) Wasser geprüft wird, **dadurch gekennzeichnet, dass** in unmittelbarer Nähe einer Dampfsperre des Daches auf die Anwesenheit von flüssigem Wasser geprüft wird, dass zusätzlich im Bereich einer Wärmedämmschicht des Daches auf die Anwesenheit von Wasserdampf geprüft wird und dass aus dem Ergebnis der Prüfung auf die Anwesenheit von Wasser auf den Zustand des Daches geschlossen wird.

2. Verfahren nach Anspruch 1, **dadurch gekennzeichnet, dass** die Anwesenheit von flüssigem Wasser oberhalb bzw. außerhalb der Dampfsperre geprüft wird.

3. Verfahren nach Anspruch 1 oder 2, **dadurch gekennzeichnet, dass** auf die Anwesenheit von Wasserdampf mittig in der Wärmedämmschicht oder an der Oberseite der Wärmedämmschicht geprüft wird.

4. Verfahren nach einem der Ansprüche 1 bis 3, **dadurch gekennzeichnet, dass** die Stellen, an denen geprüft wird, über die Dachfläche verteilt angeordnet sind.

5. Verfahren nach Anspruch 4, **dadurch gekennzeichnet, dass** die Stellen, an denen geprüft wird, über die Dachfläche gleichmäßig verteilt angeordnet sind.

6. Verfahren nach einem der Ansprüche 1 bis 3, **dadurch gekennzeichnet, dass** an mehreren Stellen des Daches an der Außenseite der Dampfsperre auf die Anwesenheit von flüssigem Wasser und gleichzeitig an diesen Stellen im Bereich der außerhalb der Dampfsperre angeordneten Wärmedämmschicht auf die Anwesenheit von Wasserdampf geprüft wird.

7. Verfahren nach einem der Ansprüche 1 bis 6, **dadurch gekennzeichnet, dass** je 1000m² Dachfläche an drei bis zehn, insbesondere sechs, Stellen geprüft wird.

8. Anordnung zum Ausführen des Verfahrens nach einem der Ansprüche 1 bis 7 mit mehreren, die Anwesenheit von flüssigem (tropfbarem) Wasser erfassenden, Sensoren (11), **dadurch gekennzeichnet, dass** die flüssiges Wasser erfassenden Sensoren (11) auch Wasserdampf erfassende Sensoren (11), die Luftfeuchte und Betauung oder Kondensation erfassen, sind, dass die Sensoren (11) mit einem Anzeigegerät (15) verbunden sind, dass die Anwesenheit von flüssiges Wasser erfassenden Sensoren (11) an der Außenseite einer Dampfsperre (5) des Daches (1), vorzugsweise mit Abstand von dieser, angeordnet sind und dass die Anwesenheit von Wasserdampf erfassenden Sensoren (11) im Bereich einer Wärmedämmschicht (7) des Daches angeordnet sind.

9. Anordnung nach Anspruch 8, **dadurch gekennzeichnet, dass** die Sensoren (11) über die Fläche des Daches (1) verteilt, insbesondere gleichmäßig verteilt, angeordnet sind.

10. Anordnung nach Anspruch 8 oder 9, **dadurch gekennzeichnet, dass** je 1000m² drei bis zehn, vorzugsweise sechs, Sensoren (11) vorgesehen sind.

11. Anordnung nach einem der Ansprüche 8 bis 10, **dadurch gekennzeichnet, dass** Sensoren (11) vorgesehen sind, die sowohl einen die Anwesenheit von flüssigem Wasser als auch einen die Anwesenheit von Wasserdampf erfassenden Bereich ausweisen.

12. Anordnung nach einem der Ansprüche 8 bis 11, **dadurch gekennzeichnet, dass** die Sensoren (11) mit dem Anzeigegerät (15) verbindenden Leitungen (13) abgedichtet durch ein dicht durch die Dachhaut (9) geführtes Rohr (19) gehen.

13. Anordnung nach Anspruch 12, **dadurch gekennzeichnet, dass** das Rohr (9) mit einer Platte (21), die zwischen der Dachhaut (9) und der Wärmedämmschicht (7) angeordnet ist, verbunden ist.

14. Anordnung nach einem der Ansprüche 8 bis 13, **dadurch gekennzeichnet, dass** das Anzeigegerät (15) eingerichtet ist, die Daten betreffend die Anwesenheit von flüssigem Wasser und/oder die betreffend Wasserdampf als Werte für die Feuchte (flüssiges Wasser) bzw. Werte für den relativen Feuchtegehalt (Wasserdampf) zu erfassen.

15. Anordnung nach Anspruch 14, **dadurch gekennzeichnet, dass** an das Anzeigegerät (15) ein Gerät (35) angeschlossen ist, das die erfassten Werte betreffend die Feuchte (Anwesenheit von flüssigem Wasser) und/oder die erfassten Werte betreffend den relativen Feuchtegehalt (Anwesenheit von Wasserdampf) aufzeichnet.
